Europäisches Patentamt

European Patent Office

Office européen des brevets

(11) Publication number: **0 549 070 A1**

# EUROPEAN PATENT APPLICATION

(21) Application number: **92204023.3**

(22) Date of filing: **18.12.92**

(51) Int. Cl.5: **H04L 9/32**

(30) Priority: **20.12.91 NL 9102144**

(43) Date of publication of application:
**30.06.93 Bulletin 93/26**

(84) Designated Contracting States:
**AT BE DE DK ES FR GB IT NL SE**

(71) Applicant: **STAAT DER NEDERLANDEN te dezen vertegenwoordigd door de Directeur-Generaal van de Rijkswaterstaat 4 Koningskade NL-2596 AA The Hague(NL)**

(72) Inventor: **Stoelhorst, Henk Jakob 26, Hermelijnstraat NL-2623 EB Delft(NL)**
Inventor: **Chaum, David 411, Kruislaan NL-1098 SJ Amsterdam(NL)**
Inventor: **Gerritse, Jacobus Johannes 69, Pleineslaan NL-3734 EM Den Dolder(NL)**
Inventor: **van Wijk, Dirk Peter 26, Westeindseweg NL-2381 EC Zoeterwoude(NL)**

(74) Representative: **van der Arend, Adrianus G.A., Ir. et al EXTERPATENT B.V. P.O. Box 3241 NL-2280 GE Rijswijk (NL)**

(54) **Method and system for batch authentication of digital data.**

(57) Method and system for obtaining and processing, within a system comprising a number of components, which may be computers, operating as participants concerned, a number of cryptographically authenticated digital data. Authentication takes place with the aid of an RSA ("Rivest, Shamir, Adleman") algorithm. A first component supplies, for each index referring to a datum of a batch of data, a public key of the algorithm to the second component, and an associated secret key of the algorithm to the third component. By using suitable processing steps, the second component can assemble the digital data to be authenticated into an unauthenticated composite datum. The third component, by using the algorithm with the product of the secret keys of the batch as a power, can then authenticate the unauthenticated composite datum to give an authenticated datum. A fourth component, by applying suitable processing steps, which comprise the algorithm, and by using the public keys, can subsequently derive from the authenticated composite datum authenticated separate data which correspond, respectively, to the unauthenticated data of the batch.

_Fig. 1._

Method for obtaining and processing, within a system comprising a number of components operating as participants concerned, a number of cryptographically authenticated digital data, a first component defining a pair of keys, consisting of a public key and an associated secret key, of an RSA ("Rivest, Shamir, Adleman") algorithm, the first component supplying the public key to a second component, the first component supplying the second key to a third component, the second component supplying a number of unauthenticated digital data to the third component, the third component authenticating the unauthenticated data, which it has received, by using the RSA algorithm and the secret key, and the third component supplying the authenticated data to a fourth component which, by using the RSA algorithm and the public key, can check the correctness of each authenticated datum.

A method of this type is known in practice. The RSA algorithm is described, for example, in European Patent Application 0139313, which also refers to further literature relating thereto. The RSA algorithm will also be explained hereinafter in the description of the figures. In the application of the algorithm, three quantities are employed, viz. a modulus n, a public key e, which each component within the system is allowed to know, and a secret key d, which is meant to be known to only one component, which, in the abovementioned system, is the third component. If the component which knows the secret key d receives a digital datum x and raises this datum x to a power which is equal to the secret key d, and then takes the modulus n of the result, a number y is obtained from which, if the quantities n, e, d are sufficiently large, another component, which knows the quantities n, e, x and y, finds it virtually impossible to derive the secret key d. According to the RSA algorithm, said quantities n, e, d are further chosen in such a way that a component, which receives the number y and raises the number y to a power which is equal to the public key e, and takes the modulus n of the result, will get back the original digital datum x. It is therefore possible to state that the digital datum y is an authenticated representation of the digital datum x, which can be provided only by the component to which the secret key d is known. The digital datum x ("datum") may, as known per se, represent a digital cheque which is signed, as it were, by a component, such as a bank, which knows the secret key d, which results in a cheque y authenticated or signed by said component, which cheque can be checked by a recipient thereof for its genuineness, i.e. whether it has been authenticated with the secret key d, because, by applying the RSA algorithm, the public key e and the modulus n the original digital datum x must get back again. If the component which receives the authenticated digital datum y is another component than the component which has supplied the unauthenticated digital datum x for authentication, the unauthenticated digital datum x in general contains a particular characteristic for the digital datum x. Such a characteristic may for example have the meaning of "this is a cheque". As a result, in practice it is virtually impossible for a component which does not know the secret key d to produce fake authenticated digital data or cheques.

In the literature, an authenticated digital datum of the abovementioned type is sometimes called "signature". The word "signature" is, however, also used in the literature for other digital data, and therefore the use of this word is avoided hereinafter.

A drawback of the known method is the fact that each component of the type of the second component has to supply digital data x, which are to be authenticated, separately to the third component, and the third component has to authenticate separately each separately received unauthenticated digital datum x and has to supply it to the fourth component, which can be any component of the system. Furthermore, it follows from the condition of non-reconstructibility of d from n, e, x and y that a datum x to be authenticated must per se be of relatively large size. The greater the number of components of the type of the second component, and as each second component during each connection with the third component has to authenticate more than two unauthenticated digital data x, the heavier will be the load on the third component and the communication channels between the second component and the third component and between the third component and the fourth component, as a result of which the waiting time for the various second components will increase. Increasing the number of third components, for example distributed over a geographical area closer to groups of second components, would, however, have the drawback of increasing the risk of the secret key d becoming known outside the third component.

The object of the invention is to overcome the drawbacks of the known method.

In order to achieve this object, the invention provides a method as described in Claim 1. In this context it is to be noted that the unauthenticated digital data may have been received by the second component from another component of the system, or may have been generated by the second component with or without interaction with another component.

In the case of the method according to the invention, each second component assembles a batch of unauthenticated digital data and supplies the batch to the third component, the third component carries out authentication on the received batch and supplies the authenticated batch to the fourth component which, from the authenticated batch, derives authenticated separate digital data. Said assembly and analysis of said batches is possible, because each unauthenticated digital datum having a particular index within the batch is assigned a pair of keys.

Other properties and advantages of the invention will become apparent from the following explanation with reference to the drawings, in which:

Fig. 1 shows a diagram of a number of components of the system in which the method according to the invention is applied; and

Fig. 2 shows a diagram of a number of components of a system in which a further-developed method according to the invention is applied.

The RSA ("Rivest, Shamir, Adleman") algorithm used in the method according to the invention is defined by the following:

$$\psi = (p-1)(q-1)$$
$$n = pq$$
$$ed = 1 \text{ modulo } \psi$$
$$3 < e < \psi$$

with:

$p$ = prime number
$q$ = prime number
$n$ = RSA modulus
$e$ = public key
$d$ = secret key, and

further, $e$ and $\psi$ are relatively prime, i.e. the largest common factor of $e$ and $\psi$ is equal to 1; the following then applies (Fermat-Euler theorem):

$$y =$$
$$x^d \text{ modulo } n$$
$$y^e \text{ modulo } n =$$
$$(x^d \text{ modulo } n)^e \text{ modulo } n$$
$$= x^{de} \text{ modulo } n$$
$$= x$$

with:

$x =$
unauthenticated digital datum
$y =$
authenticated digital datum

If the quantities n, p and q are sufficiently large, and if the unauthenticated digital datum x is known, it is virtually impossible to derive the secret key d from the authenticated digital datum y.

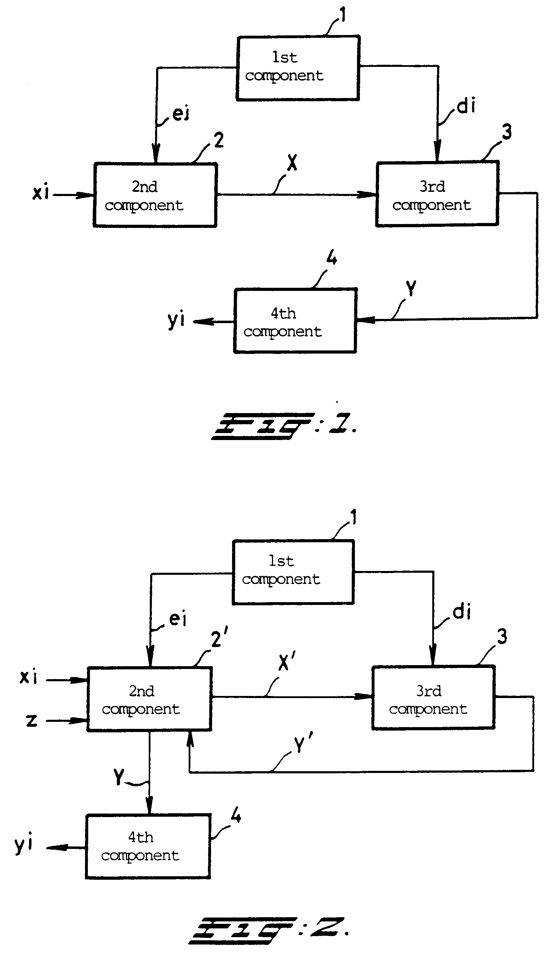

Fig. 1 shows a diagram of a system comprising a number of components, which are or are not permanently connected to each other and which operate as participants in the method according to the invention. In general, the components are computers which are or are not in continuous contact with each other.

A first component 1 supplies pairs of keys (ei, di), each comprising a public key ei and an associated secret key di, to a second component 2 and a third component 3, respectively. The second and third components 2, 3 also receive the RSA modulus n from the first component 1. The second component 2 could be a "smart card", possibly supported by a computer which is more powerful than the microcomputer of the card.

The second component 2 receives a number of unauthenticated digital data xi, or generates said data xi on its own or together with another component of the system. The second component 2 always forms a batch of unauthenticated digital data xi which are to be authenticated. The first component 1, for each unauthenticated digital datum in the batch, supplies a public key ei to the second component 2 and an associated secret key di to the third component 3. Subsequently, the second component 2, as explained later, processes each unauthenticated digital datum xi separately with the aid of the public keys of the batch and then multiplies the results obtained in the process, which produces an unauthenticated composite datum X. The second component 2 supplies the unauthenticated composite datum X to the third component 3. The third component 3 authenticates the unauthenticated composite datum X in its entirety by raising it to a power which is equal to the product of the secret keys of the batch, as a result of which an authenticated composite datum Y is obtained. The third component 3 supplies the authenticated composite datum Y to a fourth component 4 which, in a manner to be explained hereinafter, derives therefrom the separately authenticated digital data yi which are associated with the respective unauthenticated digital data xi.

Because only the third component 3 should know the secret keys di, the first component 1 and the third component 3 may be the same component.

Because the fourth component 4, for deriving the separately authenticated digital data yi from the composite authenticated datum Y, uses only public keys ei, the fourth component 4 may be any component of the system, for example the second component 2, which is then able to check the authentication by the third component 3 immediately thereafter, and which is able to report any error directly to the third component 3. Subsequently, the second component 2 can provide the approved authenticated digital data yi to other components of the system.

The method according to the invention is explained hereinafter by an example in which a batch comprises 5 digital data. The method then comprises the following steps:

1) by the first component 1:

assigning an individual pair of keys (ei, di), consisting of a public key (ei) and a secret key (di), to each index (i) of a batch of unauthenticated data to be formed according to a subsequent step, the public keys (ei) assigned to the indices of the batch, in order to be able to carry out step 4d), not having a common factor:

$$\{(e1,d1), (e2,d2), (e3,d3), (e4,d4), (e5,d5)\};$$

2) by the second component 2:

a) forming a batch of unauthenticated data:

$$\{x1,x2,x3,x4,x5\};$$

b) raising each unauthenticated datum of the batch to a power which is equal to the product of the public keys which are associated with the other data of the batch, so that a raised unauthenticated datum is obtained:

$$x1^{e2e3e4e5}, \quad x2^{e1e3e4e5}, \quad x3^{e1e2e4e5}, \quad x4^{e1e2e3e5}, \quad x5^{e1e2e3e4};$$

c) forming the product of all raised unauthenticated data:

$$X = x1^{e2e3e4e5}x2^{e1e3e4e5}x3^{e1e2e4e5}x4^{e1e2e3e5}x5^{e1e-2e3e4} \quad (1)$$

where the number represented by (1) can be interpreted as an unauthenticated composite datum (X);

d) supplying the result (X) of the previous step to the third component 3;

3) by the third component 3:

a) raising the result (X) received from the second component to a power which is equal to the product of the secret keys associated with all the data of the batch:

$$x^{d1d2d3d4d5} \quad (2)$$

and because $(x^{ei})^{di}$ modulo n = x, (2) is equal to:

$$Y = x1^{d1}x2^{d2}x3^{d3}x4^{d4}x5^{d5} \quad (3)$$

where the number represented by (3) can be interpreted as an authenticated composite datum (Y);

b) supplying the result (Y) of the previous step to the fourth component 4;

4) for the purpose of obtaining an authenticated datum (yi) which corresponds to an unauthenticated datum (xi), with a particular index (for example i = 1), of the batch from the result (Y) obtained in the previous step:
by the fourth component 4:

a) raising the result obtained in the previous step to a power which is equal to the product of the public keys associated with the other indices (≠1):

$$Y^{e2e3e4e5} = x1^{e2e3e4e5d1}x2^{e3e4e5}x3^{e2e4e5}x4^{e2e3e5}x5^{e2e3e4} \quad (4);$$

b) determining, for each (j) of the unauthenticated data (x2,x3,x4,x5) with the other indices (≠1) of the batch, a factor (f2,f3,f4,f5) which is equal to the unauthenticated data (x2,x3,x4,x5) raised to a power which is equal to the product of the public keys associated with the data of the batch, with the exception of the public key associated with the authenticated datum (yi) to be obtained and the public key associated with the unauthenticated datum (xj) for which the factor is determined:

$$f2 = x2^{e3e4e5}, \qquad f3 = x3^{e2e4e5}, \qquad f4 = x4^{e2e3e5}, \qquad f5 = x5^{e2e3e4};$$

c) dividing the result (4) of step 4a by all the factors obtained according to step 4b:

$$(result\ step\ 4a)/(f2f3f4f5) = x1^{e2e3e4e5d1} \quad (5)$$

d) determining a first integer (t1) and a second integer (k1) in such a way that the product of the first number (t1) and the power determined in step 4a (e2e3e4e5) minus the product of the second integer (k1) and the public key (e1) assigned to the particular index (1) is equal to one (t1e2e3e4e5-k1e1 = 1 or t1e2e3e4e5 = k1e1 + 1 (for example using Euclid's algorithm));

e) raising the result (5) of step 4c to a power which is equal to the first number (t1) determined in step 4d:

$$x1^{t1e2e3e4e5d1};$$

which, on the basis of what has been determined in step 4d, is equal to:

$$x1^{k1e1d1+d1} = x1^{k1e1d1}x1^{d1} = x1^{k1}x1^{d1} \quad (6)$$

f) raising the unauthenticated datum (x1) with the particular index (i = 1) to a power which is equal to the second integer (k1) determined in step 4d:

$$x1^{k1};$$

g) dividing the result (6) of step 4e by the result of step 4f, as a result of which the authenticated datum (y1) to be obtained with the particular index (i = 1) is obtained:

$$y1 = x1^{d1};$$

and where the calculations are carried out modulo the RSA modulus (n).

Because for different batches of digital data and for different components operating as second components 2, always the same pairs of keys can be used, a number of products, in particular the products which form powers, and ti and ki, have to be calculated only once by the components 2, 3 and 4. These components then need to perform only a small number of additional calculations, compared with the case of unauthenticated digital data xi being offered separately for authentication to the third component 3. The fact that more calculations are required than in the latter case is not a drawback, because the second components 2 generally have more time available for carrying out calculations than the third component 3, of which the system generally comprises only one. Until the pairs of keys are changed, the third component 3, in step 3), can always use the same power, which consists of the product of the secret keys of the batch, for raising the unauthenticated composite datum X. Irrespective of the number of unauthenticated digital data xi, which are held in the composite unauthenticated datum X, the third component 3 therefore deed to carry out substantially only one operation which is identical to the operation which would be required for authenticating a separate unauthenticated digital datum xi. Thus by using the invention a considerable gain in time for the third component 3 and for the communication channels between the second component 2 and the third component 3 and between the third component 3 and the fourth component 4 is achieved, whereby the third component 3 being able to use this gain in time for processing other batches of unauthenticated digital data which may originate from various components working as a second component 2.

The system shown in Fig. 2 is identical to the system shown in Fig. 1, except that the second component 2' of the system of Fig. 2 works differently from the second component 2 of the system of Fig. 1.

The system of Fig. 2 applies an embodiment of a blinding method as described in European Patent Application 0139313, which describes an unauthenticated digital datum to be authenticated first being blinded with the aid of a blinding factor and, after authentication, being sent back for removal of the blinding factor from the authenticated datum.

The function of blinding is to counteract the component which has carried out the authentication being able to establish a one-to-one association of an unauthenticated digital datum xi with an authenticated digital datum yj, with the same or different values for i and j. This is to ensure anonymity when the digital data in question are used as authenticated payment or access means in applications where privacy is demanded by the user thereof.

In the system of Fig. 2, the blinding factor, denoted by z, is meant to be known only to the second component 2' and is generated by the second component 2' or together with another component (not component 3) of the system.

When the second component 2' forms the composite unauthenticated datum, the second component 2' also incorporates therein the blinding factor z, as a result of which an unauthenticated, blinded, composite datum X' is obtained, which the second component 2' supplies to the third component 3. The third component 3 authenticates a received unauthenticated, blinded, composite datum in the same way as the datum X is authenticated in the system of Fig. 1. The third component 3, in this case in response to the received unauthenticated, blinded, composite datum X', supplies an authenticated, blinded, composite datum Y' to the second component 2'. The second component 2' removes the blinding factor z from the authenticated, blinded, composite datum Y' and supplies the result Y to the fourth component 4, which may be any component of the system, and which derives therefrom the separate authenticated data yi which correspond to the unauthenticated data xi of the batch in question.

In the example given above, therefore, only those steps carried out by the second component 2' instead of the second component 2 of Fig. 1 will be different for the system of Fig. 2. Following below are the steps which, for the example given above, are different when the system of Fig. 2 is used. It is to be noted in this context that step 2c') follows step 2c), the steps 4⁻a) and 4⁻b) are incorporated between the steps 3b) and 4). Step 3a) remains unchanged but in the case of Fig. 2 it works with the input and output variables X' and Y' instead of the variables X and Y in the system of Fig. 1. In the case of Fig. 2 the third component 3 provides the result obtained in step 3a to to the second component 2' instead of to the fourth component 4 in the case of Fig. 1. Said steps are:

2c') forming the product of the result (X) obtained in the previous step and a blinding factor (z) raised to a power which is equal to the product of all the public keys of the batch:

$$X' = Xz^{e1e2e3e4e5};$$

2d) supplying the result of the previous step to the third component 3;

3) the third component 3 carrying out the following steps:

3a) raising the result (X') received from the second component to a power which is equal to the product of the secret keys associated with all the data of the batch:

$$Y' = (X')^{d1d2d3d4d5} \qquad (2)$$

and because $(x^{ei})di$ modulo n = x, (2) is equal to:

$$Y' = x1^{d1}x2^{d2}x3^{d3}x4^{d4}x5^{d5}z \qquad (3')$$

where the number represented by (3') can be interpreted as an authenticated, blinded, composite datum (Y');

3b) supplying the result (Y') of the previous step to the second component 2';

4⁻a) the second component 2' dividing the result (3') obtained in the previous step by the blinding factor (z), which results in:

$$Y = x1^{d1}x2^{d2}x3^{d3}x4^{d4}x5^{d5} \qquad (3)$$

4⁻b) the second component 2' supplying the result (Y) obtained in the previous step to the fourth component 4.

By using a separate pair of keys for each digital datum of a batch of digital data it is therefore possible also to apply blinding to the whole batch of data to give an unauthenticated, blinded, composite datum X', and to undo the blinding after authentication of said datum X' to give an authenticated, blinded, composite datum Y', to give an authenticated, unblinded, composite datum Y which, as was explained with reference to Fig. 1, can be analysed into explained with reference to Fig. 1, can be analysed into separate authenticated data yi. Blinding in this process requires no additional computing time of the third component 3, and requires only one extra exponentiation, one extra multiplication and one extra division of the second component 2.

## Claims

1. Method for obtaining and processing, within a system comprising a number of components operating as participants concerned, a number of cryptographically authenticated digital data, a first component defining a pair of keys, consisting of a public key and an associated secret key, of an RSA ("Rivest, Shamir, Adleman") algorithm, the first component supplying the public key to a second component, the first component supplying the second key to a third component, the second component supplying a number of unauthenticated digital data to the third component, the third component authenticating the unauthenticated data, which it has received, by using the RSA algorithm and the secret key, and the third component supplying the authenticated data to a fourth component which, by using the RSA algorithm and the public key, can check the correctness of each authenticated datum, **characterised by** the following steps:

1) by the first component: assigning an individual pair of keys, consisting of a public key and a secret key, to each index of a batch of unauthenticated data to be formed according to a subsequent step, the public keys assigned to the indices of the batch not having a common factor;

2) by the second component:

a) forming a batch of unauthenticated data;

b) raising each unauthenticated datum of the batch to a power which is equal to the product of the public keys which are associated with the other data of the batch, so that a raised unauthenticated datum is obtained;

c) forming the product of all raised unauthenticated data;

d) supplying the result of the previous step to the third component:

3) by the third component:

a) raising the result received from the second component to a power which is equal to the product of the secret keys associated with all the data of the batch;

b) supplying the result of the previous step to the fourth component;

4) for the purpose of obtaining an authenticated datum which corresponds to an unauthenticated datum, with a particular index, of the batch from the result obtained in the previous step:

by the fourth component:

a) raising the result obtained in the previous step to a power which is equal to the product of the public keys associated with the other indices;

b) determining, for each of the unauthenticated data with the other indices of the batch, a factor which is equal to the unauthenticated data raised to a power which is equal to the product of the public keys associated with the data of the batch, with the exception of the public key associated with the authenticated datum to be obtained and the public key associated with the unauthenticated datum for which the factor is determined;

c) dividing the result of step 4a by all the factors obtained according to step 4b;

d) determining a first integer and a second integer in such a way that the product of the first number and the power determined in step 4a minus the product of the second integer and the public key assigned to the particular index is equal to one;

e) raising the result of step 4c to a power which is equal to the first number determined in step 4d;

f) raising the unauthenticated datum with the particular index to a power which is equal to the second integer determined in step 4d;

g) dividing the result of step 4e by the result of step 4f, as a result of which the authenticated datum to be obtained with the particular index is obtained;

and where the calculations are carried out modulo the RSA modulus.

2. Method according to Claim 1, the second component forming the product of an unauthenticated datum and a blinding factor which is meant to be secret from the third component, the second component supplying the product to the third component, the third component authenticating the product with the secret RSA key and supplying the authenticated product to the second component, the second component raising the authenticated product to the public RSA key and dividing the result by the blinding factor, **characterised in that** the second component between step 2c and 2d (step 2c') forms the product of the result obtained according to step 2c and the blinding factor raised to a power which is equal to the product of all the public keys of the batch, the third component in step 3b supplies the result of step 3a to the second component instead of to the fourth component, and the second component subsequently (step 4⁻a) divides the result received from the third component by the blinding factor and subsequently (step 4⁻b) supplies the result obtained in this process to the fourth component for the purpose of carrying out steps 4a to 4h inclusive.

3. System suitable for implementing the method according to Claim 1 or 2.

_Fig. 1._

_Fig. 2._

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 356 127 (ALGORITHMIC RESEARCH)<br>* page 3, line 10 - line 22 *<br>* page 3, line 54 - page 4, line 23 *<br>* page 5, line 39 - line 45 *<br>--- | 1 | H04L9/32 |
| D,A | EP-A-0 139 313 (CHAUM)<br>* page 7, line 3 - line 22 *<br><br>----- | 2 | |

TECHNICAL FIELDS SEARCHED (Int. Cl.5)

H04L

The present search report has been drawn up for all claims

| Place of search | Date of completion of the search | Examiner |
|---|---|---|
| THE HAGUE | 29 MARCH 1993 | HOLPER G.E.E. |

EPO FORM 1503 03.82 (P0401)